(19) Europäisches Patentamt
European Patent Office
Office européen des brevets

(11) EP 3 637 078 A1

(12) EUROPEAN PATENT APPLICATION

(43) Date of publication:
**15.04.2020 Bulletin 2020/16**

(51) Int Cl.:
***G01M 1/22*** *(2006.01)* ***G01M 17/013*** *(2006.01)*

(21) Application number: **18465600.7**

(22) Date of filing: **11.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Continental Automotive GmbH**
**30165 Hannover (DE)**

(72) Inventors:
- **Cimponeriu, Andrei-Stefan**
**307220 Giroc (RO)**
- **Marin, Gabriel**
**300734 Timisoara (RO)**
- **Stanciu, Adrian Florin**
**300400 Timisoara (RO)**
- **Lorincz, Zoltan**
**417078 Santion, Bihor (RO)**
- **Stancalie, Laurentiu**
**300744 Timisoara (RO)**
- **Goron, Gabriel**
**300003 Timisoara (RO)**

# (54) METHOD AND SYSTEM FOR LOCALIZING UNBALANCE OF A WHEEL OF A VEHICLE, A SYSTEM FOR LOCALIZING SAID UNBALANCED WHEEL, ELECTRONIC CONTROL UNIT AND STORAGE MEDIUM

(57) The invention relates to a method for localizing unbalance of a wheel (n = 1÷4 or n = FL, FR, RL, RR) of a vehicle during operation of said vehicle carried out in an Electronic Control Unit ECU (100) using a vibration signal (G(ti)) as provided by at least one vibration sensor (200) and wheels rotation angles (φn(tj), as provided by corresponding wheel rotation angle sensors (401÷404). The said method comprises the following steps:
S1 measuring the vibration signal at first sampling times, as a sum of the vibration signals corresponding to perceived wheel unbalances and noise at the location of the Electronic Control Unit ECU based on an amplitude and a phase of said vibration signal for each wheel, and simultaneously measuring the wheel rotation angles, for each wheel at a second sampling times;
S2 linearly interpolating the wheel rotation angles at times so that the interpolated wheel rotation angles correspond to the samples of said vibration signal;
S3 determining wheel rotation full periods, for each of the wheels, by comparing the running wheel rotation angles with multiples of 360○ or 2□ radians;
S4 calculating the sine and the cosine for the each of the interpolated wheel rotation angles for each wheel;
S5 multiplying the vibration signal by the sine and cosine of the interpolated wheel rotation angles for each wheel; and then integrating vibration signal starting with first sampling time over a number of full periods resulting the sine projection and respectively cosine projection of the interpolated wheel rotation angles, and simultaneously calculating minimum and maximum speed of the vehicle and average vehicle speed for the same period of time corresponding to the integration;
S6 calculating vibration amplitude at the location of the Electronic Control Unit ECU, said calculation being repeated over predetermined times for a total number of predetermined number of iterations or a predetermined duration;
S7 calculating mean value and standard deviation of the vibration amplitude;
S8 comparing the value of each standard deviation calculated for said predetermined number of iterations or said predetermined duration with a predetermined threshold value;
if each standard deviation is smaller than or equal to said predetermined threshold value a first condition for localization of unbalance is met, and
if any of the standard deviations is greater than said predetermined threshold value then steps 1-7 are repeated;

S9 for the wheel for which the first localization of unbalance is met,
comparing the value of the mean value of the vibration amplitude calculated for said predetermined number of iterations or said predetermined duration with a predetermined threshold mean value;
if the calculated mean value is greater than said predetermined threshold value, the second condition for localization of unbalance is also met and the corresponding

EP 3 637 078 A1

wheel is localized as unbalanced;

S10 for the wheel for which both localization conditions are met, sending a warning signal via the CAN bus to the instrument panel to issue an alert to the driver or to a third party, according to the localization of the unbalanced wheel.

The invention further relates to a system for localizing said unbalanced wheel, Electronic Control Unit and storage medium.

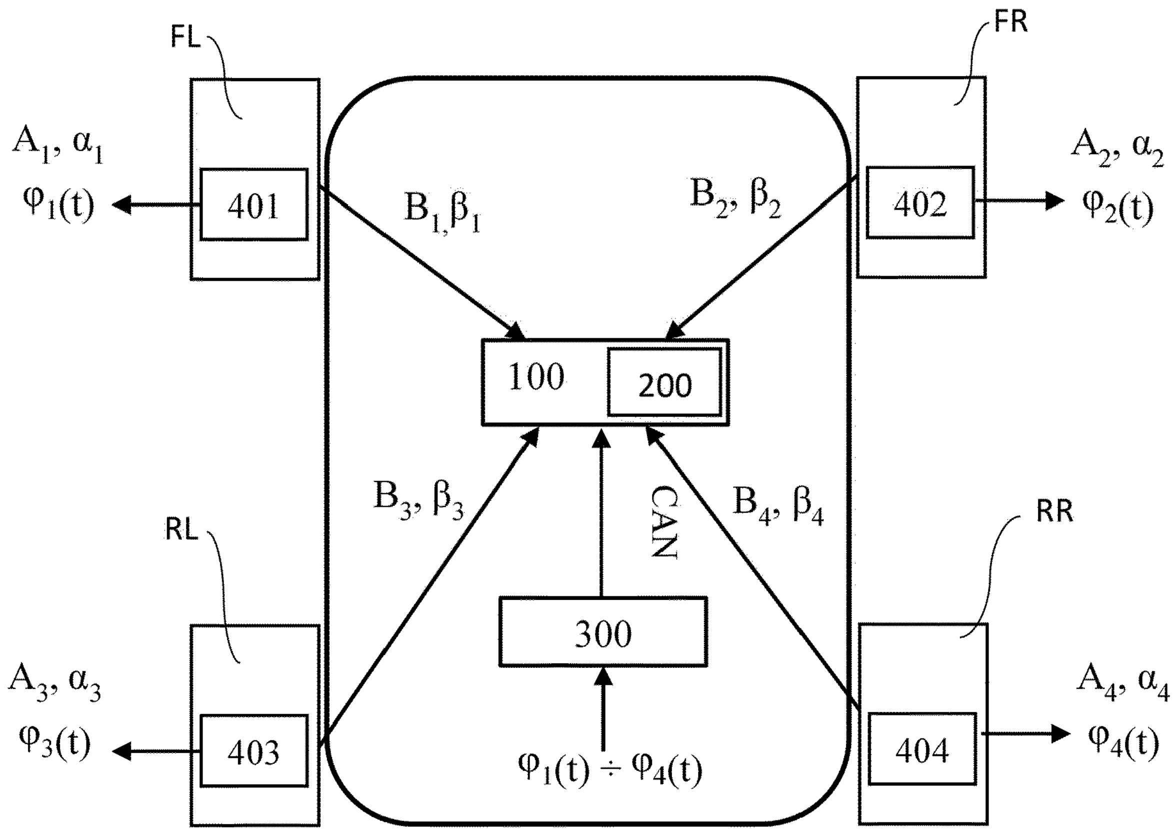


Fig. 1a

## Description

### Technical field

The invention relates to a method for localization of at least one unbalanced wheel of a vehicle during operation of the vehicle, to a system for localizing said unbalanced wheel, to an Electronic Control Unit ECU being configured to perform such a method, and to a storage medium comprising code for performing such a method.

### Background of the invention

Wheel out of balance is a problem well known to the average motorist. Vibrations caused by wheel(s) unbalance have frequencies equal to the fundamental or multiples of the rotational frequency of the wheel.

Apart from the uncomfortable effect of the vibrations, wheel(s) out of balance cause increased rates of wear to the steering joints and the tires, putting at risk safety on the road.

It is generally thought that wheel (s) unbalance cause vibrations in the vehicle's steering wheel, which the driver can sense.

However, wheel unbalance is not always sensed by the driver for some reasons, such as: steering wheel vibrations have one or more resonant frequencies, part of them being not necessarily related with wheels unbalance such as for example there may be strong vibrations at 110 km/h and no vibrations at 130 km/h; in other cases steering wheel oscillations are detected for newly balanced wheels, whereas in the case of an artificially unbalanced wheel, there were speed ranges where the steering wheel was not vibrating at all; lastly in case of autonomous driving there may be no steering wheel or no driver.

Furthermore, knowing the location of the unbalanced wheel (s) without unmounting all the wheels on the vehicle can save time, effort and money at the mechanical shop. It can also provide information concerning the technical state and history of the vehicle, useful especially for vehicle fleets, rented vehicles, autonomous vehicles etc.

For these reasons, various technical solutions addressed the problem of detecting wheels unbalance or the identification of the unbalance of the wheels while the vehicle is in operation.

One example of method addressing vehicle wheels unbalance is disclosed in EPA 14464009.1 published on 06.04.2016. In this document, further referred to throughout this invention as "prior art document" a method for detecting unbalance of a wheel is provided together with an Electronic Control Unit for performing the method and a storage medium comprising code for such a method.

Prior art document refers to a method for detecting unbalance of a wheel by evaluating signals from acceleration sensors and speed sensors. Particularly the method includes steps of determining a rotational frequency of the wheel based on the measured vehicle speed and the known wheel radius, and at the same time measuring an acceleration signal, calculating a frequency spectrum of the acceleration signal, the frequency spectrum comprising a number of amplitudes, wherein each amplitude corresponds to a frequency and detecting unbalance if the amplitude corresponding to the speed-based determined wheel rotational frequency exceeds a predetermined threshold.

It is known from prior art previously mentioned that a rotational frequency of a wheel having an unbalance can be measured in a frequency spectrum that is recorded using typical acceleration sensors and that said rotational frequency can in most cases be differentiated from other vibrations that are, for example, caused by an engine or road conditions, because the rotational frequency is known.

Technical teaching from prior art has some disadvantages:

- First disadvantage is that the method only detects if there is an unbalance without providing additional information regarding the localization of the unbalanced wheel;
- Second disadvantage is that the method disclosed requires that the vehicle has constant speed. The requirement of constant speed stems from using Fast Fourier Transformation (FFT) for determining the frequency spectrum, method that is known to provide best results when applied to constant speed of the vehicle.

### Problem to be solved by the invention

The problem to be solved by the invention is to localize at least one wheel of a vehicle that is unbalanced or vibrates synchronously with wheel rotation from other reasons such as deformation, during operation of the vehicle by using the information already available on the vehicle such as, but not limited to the car vibrations wheels rotation angles and vehicle speed, said localization being possible for both constant speed and variable speed conditions.

**Summary of the invention**

In order to solve the problem, the inventors conceived as a first object of the invention a method for localizing unbalance of a wheel of a vehicle during operation of said vehicle carried out in an Electronic Control Unit ECU using a vibration signal as provided by at least one vibration sensor and wheels rotation angles, as provided by corresponding wheel rotation angle measuring means, where the method has the following steps:

**S1** measuring the vibration signal at first sampling times, as a sum of the vibration signals corresponding to perceived wheel unbalances and noise at the location of the Electronic Control Unit ECU based on an amplitude and a phase of said vibration signal for each wheel, and simultaneously measuring the wheel rotation angles, for each wheel at a second sampling times;
**S2** linearly interpolating the wheel rotation angles at times so that the interpolated wheel rotation angles correspond to the samples of said vibration signal;
**S3** determining wheel rotation full periods, for each of the wheels, by comparing the running wheel rotation angles with multiples of 360° or $2\pi$ radians;
**S4** calculating the sine and the cosine for the each of the interpolated wheel rotation angles for each wheel;
**S5** multiplying the vibration signal by the sine and cosine of the interpolated wheel rotation angles for each wheel; and then integrating vibration signal starting with first sampling time over a number of full periods resulting the sine projection and respectively cosine projection of the interpolated wheel rotation angles,
and simultaneously calculating minimum and maximum speed of the vehicle and average vehicle speed for the same period of time corresponding to the integration;
**S6** calculating vibration amplitude at the location of the Electronic Control Unit ECU, said calculation being repeated over predetermined times for a total number of predetermined number of iterations or a predetermined duration;
**S7** calculating mean value and standard deviation of the vibration amplitude;
**S8** comparing the value of each standard deviation calculated for said predetermined number of iterations or said predetermined duration with a predetermined threshold value;

- if each standard deviation is smaller than or equal to said predetermined threshold value a first condition for localization of unbalance is met, and
- if any of the standard deviations is greater than said predetermined threshold value then steps 1-7 are repeated;

**S9** for the wheel for which the first localization of unbalance is met,

- comparing the value of the mean value of the vibration amplitude calculated for said predetermined number of iterations or said predetermined duration with a predetermined threshold mean value;

- if the calculated mean value is greater than said predetermined threshold value, the second condition for localization of unbalance is also met and the corresponding wheel is localized as unbalanced;

**S10** for the wheel for which both localization conditions are met, sending a warning signal via the CAN bus to the instrument panel to issue an alert to the driver or to a third party, according to the localization of the unbalanced wheel.

It is a further object of the present invention to provide a system for localization of the unbalanced wheel in a vehicle for applying the method comprising:

- an Electronic Control Unit ECU;
- at least one vibration sensor;
- four wheels, with indices $n$=1÷4 corresponding to respective positions Front Left (FL), Front Right (FR), Rear Left (RL), Rear Right (RR), $n$ (FL, FR, RL, RR);
- at least four rotation angle sensors, at least one corresponding to each wheel;
- at least one of the following systems: Anti-lock Braking System ABS, Electronic Stability Program ESP or any system equivalent to one of the two aforementioned systems for the purpose of measuring the wheel rotation angles.
- a communication bus, preferably a Controller Area Network (CAN bus) or any other communication means, able to transmit the measured angles to the ECU;

It is a further object of the invention to provide an Electronic Control Unit ECU incorporated in a vehicle being configured to perform a method, said ECU comprising:

- means adapted to measure the vibration signal at first sampling times, which is the sum of the vibration signals corresponding to perceived wheel unbalances and noise at the location of the Electronic Control Unit ECU based on an amplitude and a phase of said vibration signal;
- means adapted to receive the measurement results of the wheel rotation angles, for each wheel at second sampling times;
- means adapted to linearly interpolate the wheel rotation angles at chosen times so that the interpolated wheel rotation angles correspond to each sample of said vibration signal;
- means adapted determining wheel rotation full periods, for each of the wheels by comparing the running wheel rotation angles with multiples of 360° or $2\pi$ radians;
- means adapted to calculate the sine and the cosine for the each of the interpolated wheel rotation angles for each wheel;
- means adapted to multiply the vibration signal by the sine and cosine of the interpolated wheel rotation angles for each wheel;
- means adapted to integrate/sum over a sliding window consisting of a number of full periods of the wheel rotation angles, the sine projection and the cosine projection of the vibration components coming from every wheel;
- means adapted to determine minimum and maximum speed of the vehicle and average vehicle speed for the same time interval / sliding window corresponding to the integration.
- means adapted to calculate the vibration amplitude from the sine and cosine projections;
- means adapted to calculate mean value and standard deviation of the vibration amplitude, calculated over a predetermined number of iterations or duration;
- means adapted to compare for said predetermined number of iterations or said predetermined duration: firstly, the standard deviation of vibration amplitude with a predetermined threshold value and then the value of each mean value of the vibration amplitude with the respective said predetermined threshold value;
- means to communicate with the CAN bus of the vehicle;
- at least one memory necessary for performing calculations;

It is still a further object of the invention to provide a non-volatile computer-readable storage medium comprising code to cause a processor to perform the method of the invention.

Throughout the invention, for the ease of understanding of the method and system, the localization may be disclosed as referring to a single unbalanced wheel. However, it shall be understood from the specification, claims and drawings, that the invention can provide simultaneous localization of the unbalance for all wheels of the vehicle, so that it can accommodate all situations arising from practice when the unbalance can affect more than one wheel.

The rotation angle sensors is preferably designed as a wheel speed sensor.

## The advantages of the invention

The main advantages of this invention are the following:

- The first advantage of this invention is that it can localize the unbalanced wheel(s), in contrast with the state of art where the unbalance is detected, but the unbalanced wheel(s) is/are not localized.
- Another advantage of the invention is that it does not require vehicle constant speed to detect wheel unbalance(s), in contrast with prior art where unbalance is detected only while the vehicle is running at a constant speed.
- Another advantage is that in some embodiments, the invention allows not only to localize the unbalanced wheel(s) but also to determine the degree of unbalance of the wheel(s).
- Still another advantage is that determining the unbalanced wheel(s) is performed without unmounting the wheels.
- Another advantage is that working of the invention uses information that is measured by vehicle's existing systems and subsystems and does not necessarily require components exclusively dedicated to it.

Further features and advantages of the invention stem from the following description and the claims with reference to the accompanying drawings, tables and graphs, where like reference characters designate the same component throughout the figures.

## Description of the drawings

The invention will hereafter be described with reference to the drawings where:

Fig. 1a and 1b- Schematic view of a system according to the invention;
Fig. 2 - Steps 2 and 3 of the method according to the invention;

Fig. 3 - Steps 4 - 7 of the method according to the invention;
Fig. 4 - Steps 8 and 9 of the method according to the invention;
Figs. 5 - Illustration of working of the method of the invention, namely plots with measured and calculated data as resulting from tests made using an unbalance mass of 60g on the RR wheel at essentially constant speed of 130 km/h:

- Fig. 5a - Graphical illustration of the vehicle speed;
- Fig. 5b - Graphical illustration of the vibration signal $G_z$ measured by an accelerometer measuring the vertical axis;
- Fig. 5c - Graphical illustration of the calculated amplitudes Bn'.

Figs. 6 - Illustration of working of the method of the invention, namely plots with measured and calculated data as resulting from tests made using an unbalance mass of 60g on the RR wheel, at variable speed between 100 and 135 km/h:

- Fig. 6a - Graphical illustration of the vehicle speed;
- Fig. 6b - Graphical illustration of the vibration signal $G_z$ measured by an accelerometer measuring the vertical axis;
- Fig. 6c - Graphical illustration of the calculated amplitudes Bn';

Figs. 7 - Illustration of the results of working of the method of the invention:

- Fig. 7a - Graphical illustration of a comparison between the calculated unbalance for the cases illustrated in Fig. 5 and 6, respectively for essentially constant vs. variable speed;
- Fig. 7b - Graphical illustration of results for a reference case when all wheels are balanced, at 80, 110 and 130 km/h;
- Fig. 7c - Graphical illustration of linearity of results according to the method;
- Fig. 7d - Graphical illustration of results concerning localization of the unbalanced wheel, according to the method.

List of references in the drawings:

100 - Electronic Control Unit ECU/Airbag Control Unit ACU;
200 - Vibration sensor;
300 - Anti-Lock Bracking System/Electronic Stability Programme ABS/ESP;
401, 402, 403, 404 - Rotation angle sensors;
CAN bus - Control Area Network bus;
FL - Front Left Wheel;
FR - Front Right Wheel;
RL - Rear Left Wheel;
RR - Rear Right Wheel;
*n* = 1, 2, 3, 4 corresponds to the positions of the wheels FL, FR, RL, RR. Throughout the invention, reference to wheel *n* means reference to any of the four wheels, whereas one particular wheel is referenced to either by its number, 1, 2, 3 or 4 or by its position, respectively FL, FR, RL, RR;
G(t) - vibration signal measured by the vibration sensor; $\varphi_n(t)$ - wheel *n* rotation angle signal in time *t;*
$A_n$ - amplitude of the wheel *n* vibration at the place of respective wheel *n;*
$\alpha_n$ - phase of the wheel *n* vibration at the place of respective wheel *n;*
$B_n$ - amplitude of the wheel *n* vibration at the accelerometer 200 location;
$\beta_n$ - phase of the wheel *n* vibration at the accelerometer 200 location;
$B'_n$ - calculated amplitude of the wheel *n* vibration at the vibration sensor 200 location.

## Detailed description of the invention

The method is performed in modules integrated an Electronic Control Unit ECU 100, by adapted means to carry out the steps.

The method according to the invention allows localization of the unbalance wheel automatically while the vehicle is moving using the information provided by sensors that are normally present on the vehicle: vibration sensor(s) and wheel rotation angle sensors.

With reference to Fig.1a and 1b, for ease of understanding of the invention, a single vibration sensor 200 is included, which may be placed either outside the Electronic Control Unit ECU 100 being directly connected to the same as depicted in Fig 1a) or may be part of Electronic Control Unit ECU 100 as depicted in Fig 1b). Using two or more vibration sensors 200 placed at different places within the vehicle including inside the Electronic Control Unit ECU 100 shall also be considered within the scope of this invention.

Furthermore, any vibration sensor that is able to perceive vibrations such as accelerometer, pressure sensor, microphone, etc. shall be considered within the scope of this invention.

The method according to the invention uses the wheel rotation angles $\varphi_n(t)$, typically measured by wheel speed sensors that belong to systems already present in the vehicles of current generation, such as Anti-lock Braking System ABS or Electronic Stability Program ESP, represented as 300, or any system with functions equivalent to one of the two afore-mentioned systems. While using already existing wheel speed sensors is an advantage of the method, any other way of measuring the wheel rotation angles $\varphi_n(t)$ shall be considered within the scope of this invention.

The results of the measurements are made available to the other systems of the vehicle over a communication bus, such as the Controller Area Network CAN bus.

When wheel *n* is unbalanced, it generates a vibration signal. For simplicity, only the fundamental frequency is considered and the vibration signal can be analytically represented by the equation:

$$a_n(t) = A_n \cos(\varphi_n(t), + \alpha_n), \text{ where } n=1\div4 \text{ [Equation 1]},$$

where $A_n$ is the amplitude and $\alpha_n$ is the initial phase.

Again, with reference to Fig.1a and 1b, the wheels vibrations $a_n(t)$, $n=1\div4$, characterized by $A_n$, $\alpha_n$ propagate throughout the vehicle and have, at the vibration sensor location, amplitudes $B_n$ and initial phases $\beta_n$. The sensor measures the sum of the vibrations propagated from the wheels plus noise coming from the tire/road contact, vehicle engine and any other processes on the vehicle:

$$G(t) = \sum_n B_n cos(\varphi_n(t) + \beta_n) + noise$$

$$\text{where } n=1\div4 \text{ [Equation 2].}$$

**The** method according to the invention performs the localization of the unbalanced wheel (s) by calculating/estimating the amplitudes of the contributions of each of the wheels as $B'_n$ and then deciding, based on them, which of the wheel(s) is/are unbalanced. It has 10 steps as follows.

Steps 1÷6 of the method illustrate the calculation of $B'_n$, $n=1\div4$, in step 7 statistics on $B'_n$ are performed and in steps 8÷9 localization conditions are applied and it is decided whether data acquisition and calculations in steps 1-7 need to be repeated, or it readily results which of the wheel(s) (if any) is/are unbalanced. Step 10 refers to the transmission of an alert to the driver that a wheel *n* is unbalanced. Steps 4÷6 use the Lock-in Detection principle known from the state in the art.

In the **first step** of the method, while the vehicle is moving, the vibration sensor 200 measures a vibration signal G (t) at first sampling times $t_i$, e.g. every 1ms or at 1000 samples/s, and provides $G(t_i)$:

$$G(t_i) = \sum_n B_n \cos(\varphi_n(t_i) + \beta_n) + noise \quad \text{where n = } 1\div4 \text{ [Equation 2bis]}$$

Simultaneously, wheel rotation angles $\varphi_n(t_j)$ are measured by the rotation angle sensors 401÷404 and are transmitted over the CAN bus at a second sampling times tj for example at a 20 ms interval or a 50 Hz sampling rate. These values are presented only as examples, other values can be equally considered.

In step **2** of the method (see Fig.2), the $G(t_i)$ and $\varphi_n(t_j)$ signals are processed such that they are available at the same sampling times. Specifically, since for example the 20ms sampling period of $\varphi_n(t_j)$ is larger than the 1ms sampling period of $G(t_i)$, the wheel rotation angles $\varphi_n(t_j)$ are linearly interpolated at times $(t_i)$ so that the interpolated wheel rotation angles $\varphi_n(t_i)$ correspond to each sample of said vibration signal $G(t_i)$.

**In** step **3** of the method (see Fig.2), the full rotations of the four wheels are determined by comparing the running wheel rotation angles $\varphi_n(t_i)$ with multiples m of 360° or $2\pi$ radians, where m=1,2,3,4,5..., increasing until data acquisition/calculations end. The resulting periods are $T_n(m)$, n=1÷4 which represent the time intervals that correspond to an increase of $\varphi_n(t_i)$ by 360° or $2\pi$ radians.

The reciprocal values of $T_n$ are the wheel rotation frequencies $f_n= 1/T_n$, n=1÷4. For example, for a constant vehicle speed of 70 km/h, the wheels rotation frequencies can be around 10 Hz.

If vehicle speed is not constant, $T_n$ (respectively $f_n(t)$) can vary over time, such that $T_n$ is a function of time $T_n = T_n(t)$, respectively $f_n = f_n(t)$.

Various facts can lead to slight differences between wheel rotation angles $\varphi_n(t)$, n=1÷4: for example, uneven inflation of the tires, non-identical trajectories of the wheels *n* in various situations such as when taking a curve, slippage of the active wheels versus the non-slipping passive wheels etc. The localization of the unbalanced wheel *n* is based on these differences.

In **step 4** (see Fig. 3) the sine and cosine are calculated for the each of the four interpolated rotation angles $\varphi_n(t_i)$, n=1÷4.

In step **5** of the method (Fig. 3), the vibration signal $G(t_i)$ is multiplied by the sine and cosine of $\varphi_n(t_i)$, n=1÷4 and then integrated/summed starting with time $t_i$, over M full periods $T_n$ (m) of the respective $\varphi_n(t_i)$, resulting the sine projection $S_n(i)$ and respectively cosine projection $C_n(i)$:

$$S_n(i) = \frac{1}{MT_n} \sum_{t_k=t_i}^{t_k=t_i+MT_n} G(t_k)\sin(\varphi_n(t_k)) \text{ [Equation 3]}$$

$$C_n(i) = \frac{1}{MT_n} \sum_{t_k=t_i}^{t_k=t_i+MT_n} G(t_k)\cos(\varphi_n(t_k)) \text{ [Equation 4]}$$

The sums in $S_n(i)$ and $C_n(i)$ need M $T_n$ iterations to calculate and are completed only at $t_i + MT_n$.

If speed is variable, in the equations 3 and 4 above $T_n$ is a function of time or period iteration m, $T_n(m)$, so the $MT_n$ summing duration is replaced by the sum of M periods that are variable in time:

$$MT_n \to \sum_{m=1}^{M} T_n(m) \text{ [Equation 5]}$$

During the same summing duration, the average vehicle speed from time $t_i$ to $t_i + MT_n$ is calculated. The minimum and maximum speed of the vehicle during the same time are determined. If available, the speed measured by the vehicle speedometer is used; otherwise, the rotation period of any wheel or the mean period of the four wheels can be used, as for this purpose the differences between the results of either way of calculation is negligible.

If the minimum or maximum speed are out of a specified allowable speed range, the sums in Equations 3 and 4 are reset and restarted, such that the method is only applied within a permitted speed range. For simplicity, this is not represented in Fig. 3.

In step **6** of the method (see Fig.3), the sine and cosine projections $S_n(i)$, $C_n(i)$ are used to calculate the vibration amplitude $B'_n(i)$:

$$B'_n(\mathrm{i}) \cong \sqrt{S_n(i)^2 + C_n(i)^2} \text{ [Equation 6]}$$

The calculations in steps 1÷6 are repeated over N iterations of $t_i$ or, equivalently, during a predetermined duration D.

In step **7** of the method (see Fig. 3) the means and standard deviations of the vibration amplitudes $B'_n(i)$, for all considered iterations i are calculated, referred to as $\mu_n$ and respectively $\sigma_n$, n=1÷4. Means $\mu_n$ represent the values that are closest to truth; standard deviations $\sigma_n$ represent the noise in the data/calculations concerning wheel n.

In step **8** of the method (see Fig.4) the noise levels are examined: if the standard deviations $\sigma_n$, n=1÷4 are larger than a predetermined threshold value $\sigma_{Max}$, the measurement is considered too noisy and steps 1÷7 are carried out again for that wheel. If standard deviation $\sigma_n$ is smaller than or equal to said predetermined threshold value $\sigma_{Max}$ a first condition for localization of the unbalance is met for the wheel *n.*

In step **9** of the method (see Fig.4), the values of the means $\mu_n$, n=1÷4 are compared with a predetermined threshold value $\mu_{Max}$ in order to check if the second localization condition is met. The second localization condition is met for the wheels for which $\mu_n$ exceed said predetermined threshold value $\mu_{Max}$. The wheel n for which both localization conditions are met is considered unbalanced.

Said predetermined threshold values $\mu_{Max}$, $\sigma_{Max}$ depend on speed and are retrieved or interpolated from calibration look-up tables based on the average speed calculated at step **5.** The values from these two look-up tables are determined based on experimental data, for specific vibration sensors and vehicle types.

According to another preferred embodiment, the $\sigma_{Max}$ and $\mu_{Max}$ thresholds used at Steps 8 and 9 also depend on wheel position, $\sigma_{Max,n}$ and $\mu_{Max,n}$.

For the unbalanced wheel *n,* in step **10** of the method (not represented graphically) a warning signal can be sent according to the localization of the wheel (*n*=1 corresponds to FL, n=2 corresponds to FR etc), e.g. via the CAN bus to the instrument panel to issue an alert to the driver or to a third party, such as for example a fleet management monitoring centre, a self-driving vehicle monitoring centre etc.

According to a preferred embodiment, during the same summing duration determined at step 5 the increase of the pairwise difference of the wheel angles is calculated, $\Delta\varphi_{n1,n2} = [\varphi_{n1}(ti+MTn) - \varphi_{n2}(t_i+MT_n)] - [\varphi_{n1}(t_i) - \varphi_{n2}(t_i)]$. If there are pairs of wheels n1, n2 for which $\Delta\varphi_{n1,n2}$ is less than $2\pi$ radians, M is extended until $\Delta\varphi_{n1,n2}$ reaches $2\pi$ radians. For simplicity, this is not represented in Fig. 3.

According to another preferred embodiment, assuming that the dependence of mean value ($\mu_n$) on an unbalance mass to be linear, Step 9 may be extended by a calibration phase, where wheels are balanced and known unbalances are created, and oscillation amplitudes $B'_n$ or more exactly means $\mu_n$ are measured accordingly, to learn the scaling between $\mu_n$ and its corresponding unbalancing mass, separately on each of the wheels. These scalings can be later used to multiply calculated $B'_n$ and means and estimate the wheel unbalance(s).

In another preferred embodiment, the amplitude $A_n$ and the phase $\alpha_n$ of the wheel *n* vibration may refer to any harmonic of said wheel *n.* The harmonics of the vibrations can be simply measured by multiplying the wheel angles accordingly; the $k^{th}$ harmonic in the vibration signal G(t) may be processed by using the angular values $k\cdot\varphi_n(t)$.

According to a preferred embodiment depicted in Fig. 1b, the method according to the invention may be carried out in an Airbag Control Unit ACU 100 using the accelerometer 200 of said Airbag Control Unit ACU 100 and the rotation angle sensors 401÷404 of the ABS or ESP vehicle system 300.

According to another preferred embodiment of the invention depicted in Fig. 1a, the signal of the vibration sensor 200 may be provided by a pressure sensor used at a high enough sampling rate, or a microphone or any other sensor capable of perceiving vibrations of the vehicle chassis, belonging to electronic system(s) on the vehicle, or by vibration sensors used in the Passive Safety and Sensorics such as but not limited to Acceleration Based Front Side Impact Satellite (G SAT), Rollover, Crash Impact Sound Sensor (CISS), or even pressure sensors like the Pressure Based Side Impact Satellite (P SAT) or any other similar sensors.

According to another preferred embodiment of the invention, the wheel *n* may stand for a group of two wheels mounted on the same axle. As in this case both of the wheels belonging to the group share the same wheel rotation angle $\varphi_n(t)$, the localization of the unbalance refers to the group and not to the individual wheel part of the group.

According to another preferred embodiment of the invention, in case that the vibration signal is provided by the accelerometer 200, since wheels static and respectively dynamic unbalance creates vibrations that occur in the rotation plane and respectively perpendicularly to the rotation plane and moreover the elastic links between the mechanical components of the vehicle can create crossover effects, the preferred axis for the measurement of the acceleration signal $G(t_i)$ can be any of the X, Y and Z axis.

Hereafter examples of application of the method according to the invention and a specific implementation of the system according to the invention are provided, with reference to Fig. 5, 6, and 7. For all the cases therein, the summing/integrating M has the value of 3500 rotations; the duration D of step 7 was such that a total running time of ~300s was used.

In the example depicted in Fig. 5, the vehicle is running at an essentially constant speed of 130km/h, having an unbalance mass of 60g placed at the RR wheel, whereas in the example corresponding to in Fig. 6 the vehicle is running at a variable speed between 100 and 135 km/h having the same unbalance mass of 60g placed at the RR wheel.

Fig. 5a and respectively Fig. 6a show the graphs of vehicle speed, as measured by the vehicle speedometer and transmitted over the CAN bus.

Fig. 5b and respectively Fig. 6b show the acceleration signal $G(t_i)$ as measured by the accelerometer 200 in step 1 of the method. Noisy signals are visible, as available on running vehicles. On Fig. 6b it is visible that the acceleration signal and the noise correlate positively with the speed, explaining the need to use threshold values $\sigma_{n,Max}$ that depend on speed, as mentioned in Step 9 of the method.

The calculated amplitudes $B_n$' (t) in step 6 of the method are displayed in Fig. 5c and respectively Fig. 6c. The plot in Fig. 5c starts at time $t \cong 180s$, which represents the first summing duration for the chosen number of full periods M=3500 at the given speed. The Y values for $t \cong 180s$ are the calculated amplitudes $B'_{RL}(180) \cong 0.005$, $B'_{FL}(180) \cong 0.043$, $B'_{FR}(180) \cong 0.047$, $B'_{RR}(180) \cong 0.115$. The last value is clearly the largest, indicating that the RR wheel is out of balance as compared to the other wheels. The last time is for $t \cong 305s$ and it represents the calculations and sums performed during M=3500 rotation periods ending at $t \cong 305s$. Since the speed is approximately constant, the summing duration stays about the same, approximately 180s. Between $t \cong 180s$ and $t \cong 305s$ the calculated amplitudes somehow oscillate because of an unknown cause, - other data recordings (not shown) do not display such oscillations. For this entire time range, the means $\mu_n$ and standard deviations $\sigma_n$ are calculated and can be seen in Fig. 7a, on the 130 km/h abscissa.

The plot in Fig. 6c starts at t ≅ 200s, which means that the first sine/cosine sum needed about 200s to complete - speed oscillates between 135km/h and 105 km/h and on average is smaller than the speed in the previous case (constant 130 km/h), so the summing time that comprises M=3500 full rotations is larger than in the previous case (some 180s) . After the starting time t ≅ 200s, each time sample corresponds to a shifted summing duration of M full periods.

Fig.7 displays means $\mu_n$ and standard deviations $\sigma_n$ of the estimated acceleration amplitude $B'_n$ (i) calculated in step 7 as described and illustrated in Fig. 5c and Fig 6c, for some cases of significance for the method and to illustrate performance. Means $\mu_n$ and standard deviations $\sigma_n$ are represented on the abscissa as error bars, like $\mu_n \pm \sigma_n$, with n=1÷4 corresponding respectively to the wheels FL, FR, RL, RR. The legend and the shades on the plot represent the wheels for which calculations are performed, as described earlier.

Fig. 7a - compares the calculated unbalance for the examples in Figs. 5 and 6: RR (n=4) unbalance of 60g, constant and variable speed at or around 130km/h. The plot shows that localization of the unbalanced wheel RR (n=4) is correct: the mean calculated unbalance $\mu_{RR}$ is of around 0.1 ~ 0.11, while $\sigma_{RR}$ is small - less than 0.005. For the other wheels, $\mu$ is up to 0.05 and $\sigma$ is up to 0.01. The difference between the results of the two cases is not large and proves that the method can successfully be applied for variable speed.

Fig.7b displays the reference case, that is, the mean value and the standard deviation $\mu_n \pm \sigma_n$ when all wheels are balanced, at three different speeds: 80, 110 and 130 km/h. These values can provide the unbalance threshold for the mean $\mu_{Max}$. For instance, by multiplying by 1.5 the values of the maximum over n of the calculated $\mu_n$ for the reference case, the following are obtained and can be used in Step 9 of the method: $\mu_{Max}$(80km/h) = 0.03, $\mu_{Max}$(110km/h) =0.065, $\mu_{Max}$(130km/h) = 0.052.

Thresholds for the standard deviation can be obtained by multiplying e.g. by 2 the values of the maximum over n of the calculated $\sigma_n$ for the reference case, yielding values that can be used in Step 8 of the method: $\sigma_{Max}$(80km/h) = 0.0015, $\sigma_{Max}$(110km/h) = 0.008, $\sigma_{Max}$(130km/h) = 0.007. The increased $\mu_n$(110km/h) and $\sigma_n$(110km/h) correspond to a resonance of the vibration propagation on the vehicle, which the driver perceived at 110 km/h.

The resonance at 110 km/h is probably also the reason why in Fig. 7a the $\mu_n$ (100÷135km/h) is larger than $\mu_n$(130km/h), while the average speed for the former is smaller than 130km/h and unbalance vibrations generally increase with speed.

Fig.7c displays the linearity of the results. It plots $\mu_n \pm \sigma_n$ at artificial unbalances of the RR wheel of 0, 40, 60 and 80g, all measured at 130 km/h. In all cases $\mu_{RR}$ is a significantly higher than the other $\mu_n$. The dependence of $\mu_{RR}$ on the unbalance mass is close to linear, therefore a calibration may step may be added to Step 9 of the method, as mentioned.

Fig. 7d displays the results of the localization method when a 60g unbalance mass was positioned on the FL, then on the FR, then on the RL and then on the RR wheels, and measurements were performed at 130 km/h. The markers on the horizontal axis of the plot represent the artificially unbalanced wheel; the shades and labels on the plot indicate the wheel for which calculations are performed. In what follows, $\mu_{n1,n2}$ represents the calculated mean of $B'_{n1}$ when wheel n2 was artificially unbalanced.

**With** reference to the RR wheel unbalance mass placement - the RR abscissa, $\mu_{RR,RR} \cong 0.11$ for the RR detection wheel, well above $\mu_{Max}$ (130km/h) = 0.052. The other $\mu$ values are $\mu_{FL,RR} \cong 0.05$, $\mu_{FR,RR} \cong 0.005$, $\mu_{RL,RR} \cong 0.02$, below $\mu_{Max}$ (130km/h) = 0.052. Therefore, the result for these data is that there is a single unbalanced wheel, RR. Standard deviations $\sigma_{n,RR}$ n=1÷4 (using the same indices as the means) are visibly smaller than $\sigma_{Max}$(130km/h) = 0.007, so this localization is valid with respect to noise.

The results for the artificially unbalanced RL wheel (the RL abscissa) are: $\sigma_{FL,RL} \cong 0.003$, $\sigma_{FR,RL} \cong 0.006$, $\sigma_{RL,RL} \cong 0.002$, $\sigma_{RR,RL} \cong 0.007$; they are all less or equal to $\sigma_{Max}$(130km/h) = 0.007, so noise is not too large. The means are $\mu_{FL,RL} \cong 0.04$, $\mu_{FR,RL} \cong 0.04$, $\mu_{RL,RL} \cong 0.12$, $\mu_{RR,RL} \cong 0.03$. Of them, $\mu_{RL,RL} \cong 0.12$ exceeds $\mu_{Max}$(130km/h) = 0.052 and the others do not; so the method indicates a single unbalanced wheel, RL, which is correct.

Still on Fig. 7c for the case when the FR wheel was unbalanced (the FR abscissa), $\sigma_{FL,FR} \cong 0.025$ and $\sigma_{FR,FR} \cong 0.015$ indicate noise that exceeds $\sigma_{Max}$(130km/h) = 0.007, so data acquisition and summing would need to be extended. For the rear wheels, $\sigma_{RL,FR} \cong 0.004$ and $\sigma_{RR,FR} \cong 0.003$ there isn't too much noise and the means are $\mu_{RL,FR} \cong 0.011$ and $\mu_{RR,FR} \cong 0.012$, well below $\mu_{Max}$ (130km/h) = 0.052 - which is correct. This happens because of the setup of our data collection, with the ACU placed near the rear axle of the vehicle rather than at the centre of the chassis. For such cases, using thresholds that depend on wheel position, $\sigma_{Max,n}$ and $\mu_{Max,n}$ is advised.

In Fig. 7c when (only) the FL wheel was artificially unbalanced (the values on the FL abscissa), the two values $\mu_{FL,FL} \cong 0.083$ and $\mu_{FR,FL} \cong 0.089$ are very close: there is crossover of the detected FL and FR. This happens as the wheel angle difference $\Delta\varphi_{FL,FR}$ only reaches 150° during the time interval of 300s (angular data not represented graphically) . This small angle increase is insufficient to allow the separation of the FL and FR wheels with the lock-in detection, and such cases are dealt with by extending M until an angular difference of 360° is reached in Step 5, as specified in a preferred embodiment.

The method according to the invention may be carried out in a system. With reference to Fig. 1a and 1b, the system comprises:

- an Electronic Control Unit ECU 100;
- at least one vibration sensor 200;
- a communication bus, preferably a Controller Area Network (CAN bus) ;
- four wheels *n,* with indices n=1÷4 corresponding to respective positions Front Left FL n=1; Front Right FR n=2; Rear Left RL, n=3; Rear Right RR, n=4.
- at least four rotation angle sensors 401-404, at least one corresponding to a wheel.
- at least one of the following systems: Anti-lock Braking System ABS 300, Electronic Stability Program ESP 300.

Each of the wheels *n* may stand for a group of two wheels mounted on the same axle.

The vibration sensor 200 may be a module or an accelerometer of the Electronic Control Unit ECU 100, or may belong to other electronic systems on the vehicle, or other sensors used for the early detection of accidents such as but not limited to Acceleration Based Front Side Impact Satellite (G SAT), Rollover, Crash Impact Sound Sensor (CISS), or even pressure sensors like the Pressure Based Side Impact Satellite (P SAT) or any other similar sensors.

It is also possible that a combination of two or more vibration sensors 200 be contemplated, such as but not limited to one vibration sensor placed within the Electronic Control Unit ECU 100 and the other(s) belonging to other electronic systems or all vibration sensors belonging to the other electronic systems or used for the early detection of accidents.

When two or more vibration sensors 200 are used, the basic principle of their selection is to use for each wheel *n* the vibration sensor that provides the largest vibration signal for that particular wheel *n,* for example for front wheels it can be used the vibration sensor 200 of the ACU 100 and for rear wheels the G SAT or P SAT. Any combination of vibration sensors may be possible provided that the vibration signal is proven to be sufficient to discriminate the contribution of the respective wheel *n.*

The invention further provides an Electronic Control Unit ECU 100 incorporated in a vehicle being configured to perform a method according to the invention. Said ECU 100 comprises means adapted to carry out the steps of the method:

- means adapted to measure the vibration signal $G(t_i)$ at first sampling times $t_i$, as a sum of the vibrations corresponding to perceived wheel unbalances and noise at the location of the Electronic Control Unit ECU (100) based on amplitudes $B_n$ and a initial phases $\beta_n$ of said vibration signal $G(t_i)$;
- means adapted to receive the results of the measurement of the wheel rotation angles $\varphi_n(t_j)$, for each wheel ($n$=1÷4) at second sampling times $t_j$;
- means adapted to linearly interpolate the wheel rotation angles $\varphi_n(t_j)$) at times ($t_i$) so that the interpolated wheel rotation angles $\varphi_n(t_i)$ correspond to each sample of said vibration signal $G(t_i)$;
- means adapted to determine wheel rotation full periods $T_n(m)$, for each of the wheels $n$=1÷4 by comparing the running wheel rotation angles $\varphi_n(t_i)$ with multiples m of 360° or $2\pi$ radians;
- means adapted to calculate the sine and the cosine for the each of the interpolated wheel rotation angles $\varphi_n(t_i)$ for each wheel ($n$=1÷4);
- means adapted to multiply the vibration signal $G(t_i)$ by the sine and cosine of the interpolated wheel rotation angles $\varphi_n(t_i)$ for each wheel $n$=1÷4;
- means adapted to integrate over a sliding window consisting of a number M of full periods $T_n(m)$, resulting in the sine projection $S_n(i)$ and respectively cosine projection $C_n(i)$ of the calculated amplitudes $B'_n(i)$;
- means adapted to calculate minimum and maximum speed of the vehicle and average vehicle speed for the same period of time corresponding to the integration;
- means adapted to calculate the vibration amplitude $B'_n(i)$ from its sine and cosine projections;
- means adapted to calculate mean value $\mu_n$ and standard deviation $\sigma_n$ of the vibration amplitude $B'_n(i)$ for all considered iterations i;
- means adapted to compare for said predetermined number N of iterations or said predetermined duration D: firstly, the standard deviation $\sigma_n$ of vibration amplitude $B'_n(i)$ with a predetermined threshold value $\sigma_{Max}$ and then the value of each mean value $\mu_n$ with the respective said predetermined threshold mean value $\mu_{Max}$;
- means to communicate with vehicle's CAN bus;
- at least one memory necessary for performing calculations;

The Electronic Control Unit ECU 100 may preferably be the Airbag Control Unit ACU 100, further comprising the at least one accelerometer 200.

Finally, the invention provides for a non-volatile computer-readable storage medium comprising code to cause a processor to perform a method according the invention.

It should be noted that the foregoing embodiments and examples of realization, as well as the figures are provided merely for the purpose of a better understanding of the invention and are in no way limiting present invention. Changes may be made within the scope of the claims without departing from the coverage of present invention in its aspects; rather present invention extends to all functionally equivalent embodiments and methods within said scope of the appended claims.

- the respective a predetermined threshold of standard deviation ($\sigma_n$)
- means to communicate with vehicle's CAN bus;
- at least one memory necessary for performing calculations;

The invention refers additionally to an electronic control unit ECU (100) according to claim 14, characterized in that ECU is preferably an Airbag Control Unit ACU (100), further comprising the at least one accelerometer (200).

Furthermore, the inventions refers to a non-volatile computer-readable storage medium comprising code to cause a processor to perform a method according to any of the claims 1 to 10.

## Claims

1. Method for localizing unbalance of a wheel (n = 1÷4 or n = FL, FR, RL, RR) of a vehicle during operation of said vehicle carried out in an Electronic Control Unit ECU (100) using a vibration signal ($G(t_i)$) as provided by at least one vibration sensor (200) and wheels rotation angles ($\varphi_n(t_j)$, as provided by corresponding wheel rotation angle sensors (401÷404) **characterized in that** the method has the following steps:

   **S1** measuring the vibration signal ($G(t_i)$) at first sampling times ($t_i$), which is a sum of the vibration signals corresponding to wheel unbalances as perceived at the location of the Electronic Control Unit ECU (100) and having amplitudes $B_n$ and simultaneously measuring the wheel rotation angles ($\varphi_n(t_j)$, for each wheel (*n*) at second sampling times ($t_j$);
   **S2** linearly interpolating the wheel rotation angles ($\varphi_n(t_j)$) at times ($t_i$) so that the interpolated wheel rotation angles ($\varphi_n(t_i)$) correspond to each sample of said vibration signal ($G(t_i)$);
   **S3** determining wheel rotation full periods ($T_n(m)$), for each of the wheels (*n*) by comparing the wheels rotation angles ($\varphi_n$(ti)) with multiples (m) of 360° or $2\pi$ radians;
   **S4** calculating the sine and the cosine for the each of the interpolated wheel rotation angles ($\varphi_n(t_i)$) for each wheel (*n*);
   **S5** multiplying the vibration signal ($G(t_i)$) by the sine and cosine of the interpolated wheel rotation angles ($\varphi_n(t_i)$ for each wheel (*n*);
   and then integrating/summing over a sliding window consisting of a number (M) of full periods ($T_n(m)$ resulting the sine projection ($S_n(i)$) and respectively cosine projection ($C_n(i)$) of the vibration amplitudes ($B'_n(i)$),
   and simultaneously calculating minimum and maximum speed of the vehicle and average vehicle speed for the same period of time corresponding to the integration;
   **S6** calculating vibration amplitude($B'_n(i)$) at the location of the Electronic Control Unit ECU (100), said calculation being repeated for a total number of predetermined number (N) of iterations or a predetermined duration (D);
   **S7** calculating mean value ($\mu_n$) and standard deviation ($\sigma_n$) of the vibration amplitude ($B'_n(i)$);
   **S8** comparing the value of each standard deviation ($\sigma_n$) calculated for said predetermined number (N) of iterations or said predetermined duration (D) with a predetermined threshold value of standard deviation ($\sigma_{Max}$); For each wheel,

   - if its standard deviation ($\sigma_n$) is smaller than or equal to said predetermined threshold value of standard deviation ($\sigma_{Max}$) a first condition for localization of unbalance is met and
   - if its standard deviation ($\sigma_n$) is greater than said predetermined threshold value of standard deviation ($\sigma_{Max}$), then steps 1-7 are repeated;

   **S9** for the wheel (*n*) for which the first localization of unbalance is met,

   - comparing the value of each mean value ($\mu_n$) of the vibration amplitude ($B'_n(i)$) calculated for said predetermined number (N) of iterations or said predetermined duration (D) with a predetermined threshold mean value ($\mu_{Max}$);
   - if each calculated mean value ($\mu$) is greater than said predetermined threshold mean value ($\mu_{Max}$); the second condition for localization of unbalance is met and the corresponding wheel (*n*) is localized as unbalanced;

**S10** for the wheel (*n*) for which both localization conditions are met, sending a warning signal, in particular via CAN bus to the instrument panel, to issue an alert to the driver or to a third party, according to the localization of the unbalanced wheel (*n*).

2. Method according to Claim 1, **characterized in that**, during the summing duration determined at step 5 the increase of the pairwise difference of the wheel angles, calculated according to the formula:

$$\Delta\varphi_{n1,n2} = [\varphi_{n1}(t_i+MT_n) - \varphi_{n2}(t_i+MT_n)] - [\varphi_{n1}(t_i) - \varphi_{n2}(t_i)]$$

if for the pairs of wheels (n1, n2) $\Delta\varphi_{n1,n2}$ is less than $2\pi$ radians, M is extended until $\Delta\varphi_{n1,n2}$ reaches $2\pi$ radians.

3. Method according to Claim 1, **characterized in that**, assuming that the dependence of mean value ($\mu_n$) on an unbalance mass to be linear, Step 9 comprises a calibration phase, where all wheels are balanced and known unbalances are created and vibration amplitudes ($B'_n$)), and mean values ($\mu_n$) are measured accordingly, to establish the scale of corresponding mean values ($\mu_n$), separately on each of the wheels (*n*), to allow later to provide an estimated unbalance based on calculated mean values ($\mu_n$)

4. Method according to any of the preceding claims, **characterized in that** the amplitude ($B_n$) and phase ($\beta_n$) of said vibration signal ($G(t_i)$) may refer to any harmonic (*k*) of said wheel (*n*), and the calculations involving the wheel rotation angles ($\varphi_n(t_i)$) may be simply performed by using corresponding multiples of the wheel rotation angles ($k\cdot\varphi_n(t_i)$).

5. Method according to Claim 1, **characterized in that** the threshold value of standard deviation ($\sigma_{Max}$) and mean value ($\mu_{Max}$) thresholds used at Steps 8 and 9 ($\sigma_{Max,n}$ and $\mu_{Max,n}$) depend on wheel (*n*) position.

6. Method according to Claim 1, **characterized in that** it is preferably carried out in an Airbag Control Unit ACU (100) and **in that** the at least one vibration sensor (200) is preferably the accelerometer of the Airbag Control Unit ACU (100).

7. Method according to Claim 1 **characterized in that** the at least one vibration sensor (200) may belong to other electronic system(s) on the vehicle, or to other vibration sensors used in the Passive Safety and Sensors, such as but not limited to Acceleration Based Front Side Impact Satellite (G SAT), Rollover, Crash Impact Sound Sensor (CISS), or even pressure sensors like the Pressure Based Side Impact Satellite (P SAT) or any other similar sensors.

8. Method according to any of the preceding claims, **characterized in that** the wheel (n) may stand for a group of two wheels mounted on the same axle and **in that** the localization of the unbalance refers to said group.

9. Method according to any of the preceding claims, **characterized in that**, in case that the vibration signal is provided by an accelerometer (200), the preferred axis for the measurement of the acceleration signal ($G(t_i)$) can be any of the X, Y and Z axis.

10. System for localization of the unbalanced wheel in a vehicle for applying the method according to any of claims 1 to 9, comprising:

- an Electronic Control Unit ECU (100);
- at least one vibration sensor (200);
- four wheels ($n=1\div4$) corresponding to respective positions Front Left (FL), Front Right (FR), Rear Left (RL), Rear Right (RR), n (FL,FR,RL,RR)
- at least four rotation angle sensors (401-404), at least one corresponding to a wheel
- at least one of the following systems: Anti-lock Braking System ABS (300), Electronic Stability Program ESP (300) or any system equivalent to one of the two afore-mentioned systems for the purpose of measuring the wheel rotation angles ($\varphi_n(t)$)
- a communication bus, preferably a Controller Area Network (CAN bus).

11. System according to claim 10 **characterized in that** each wheel (*n)* may stand for a group of two wheels mounted on the same axle.

**12.** System according to claim 10 or 11 **characterized in that** the at least one vibration sensor (200) is a component of the Electronic Control Unit ECU (100).

**13.** Electronic Control Unit ECU (100) incorporated in a vehicle being configured to perform a method according to any of claims 1 to 10, comprising:

- means adapted to measure the vibration signal $G(t_i)$ at first sampling times ($t_i$), as a sum of the vibration signals corresponding to perceived wheel unbalances and noise at the location of the Electronic Control Unit ECU (100) based on an amplitude ($B_n$) and a phase ($\beta_n$) of said vibration signal ($G(t_i)$)
- means adapted to receive the results of the measurement of the wheel rotation angles ($\varphi_n(t_j)$, for each wheel ($n$) at second sampling times ($t_j$);
- means adapted to linearly interpolate the wheel rotation angles ($\varphi_n(t_j)$) at times ($t_i$) so that the interpolated wheel rotation angles $\varphi_n(t_i)$ correspond to each sample of said vibration signal $G(t_i)$;
- means adapted to determine wheel rotation full periods ($T_n(m)$), for each of the wheels ($n=1\div4$) by comparing the running wheel rotation angles ($\varphi_n(t_i)$) with multiples (m) of 360° or $2\pi$ radians;
- means adapted to calculate the sine and the cosine for the each of the interpolated wheel rotation angles $\varphi_n(t_i)$ for each wheel ($n=1\div4$);
- means adapted to multiply the vibration signal ($G(t_i)$) by the sine and cosine of the interpolated wheel rotation angles ($\varphi_n(t_i)$ for each wheel ($n=1\div4$);
- means adapted to integrate starting with first sampling time ($t_i$) over a number (M) of full periods ($T_n(m)$ resulting the sine projection ($S_n(i)$) and respectively cosine projection ($C_n(i)$) of interpolated wheel rotation angles ($\varphi_n(t_i)$,
- means adapted to calculate the minimum and maximum speed of the vehicle and average vehicle speed for the same period of time corresponding to the integration.
- means adapted to calculate the vibration amplitude ($B'_n(i)$) at the place of the Electronic Control Unit ECU (100);
- means adapted to calculate mean value ($\mu_n$) and standard deviation ($\sigma_n$) of the vibration amplitude ($B'_n(i)$);

means adapted to compare for said predetermined number (N) of iterations or said predetermined duration (D): firstly, the standard deviation ($\sigma_n$) of vibration amplitude ($B'_n(i)$) with a predetermined threshold mean value ($\sigma_{Max}$) and then the value of each standard deviation ($\sigma_n$) of the vibration amplitude ($B'_n(i)$) with

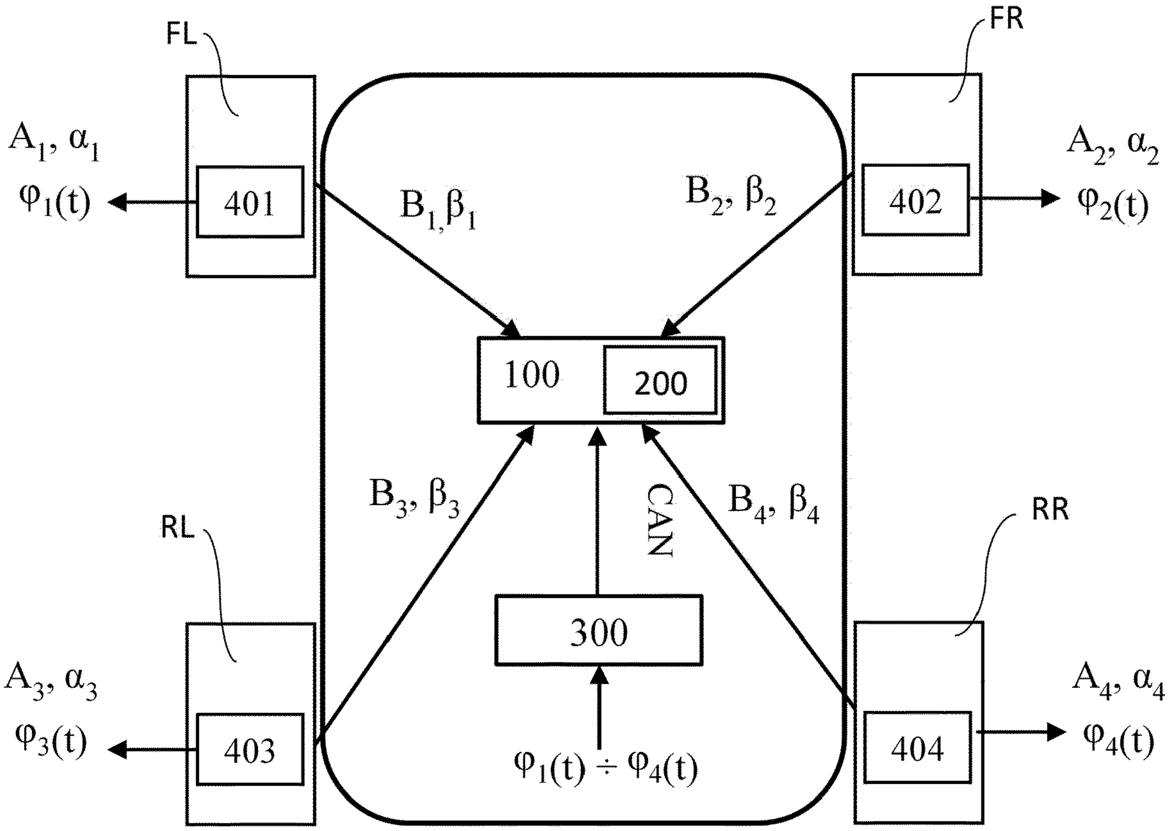
FL
FR
$A_1$, $\alpha_1$
$\varphi_1(t)$
401
$B_1$,$\beta_1$
$B_2$, $\beta_2$
402
$A_2$, $\alpha_2$
$\varphi_2(t)$
100
200
$B_3$, $\beta_3$
CAN
$B_4$, $\beta_4$
RL
RR
300
$A_3$, $\alpha_3$
$\varphi_3(t)$
403
$\varphi_1(t) \div \varphi_4(t)$
404
$A_4$, $\alpha_4$
$\varphi_4(t)$

**Fig. 1a**

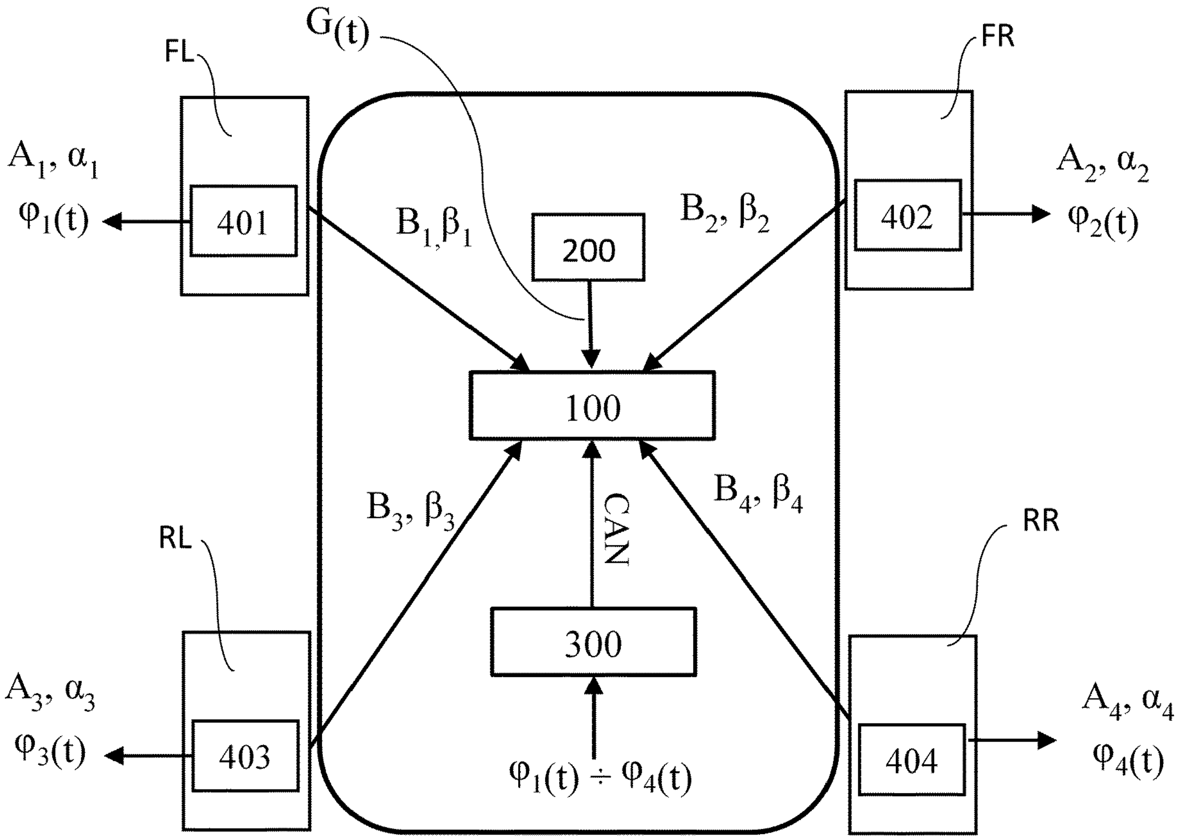
G(t)
FL
FR
$A_1$, $\alpha_1$
$\varphi_1(t)$
401
$B_1$,$\beta_1$
200
$B_2$, $\beta_2$
402
$A_2$, $\alpha_2$
$\varphi_2(t)$
100
$B_3$, $\beta_3$
CAN
$B_4$, $\beta_4$
RL
RR
300
$A_3$, $\alpha_3$
$\varphi_3(t)$
403
$\varphi_1(t) \div \varphi_4(t)$
404
$A_4$, $\alpha_4$
$\varphi_4(t)$

Fig. 1b

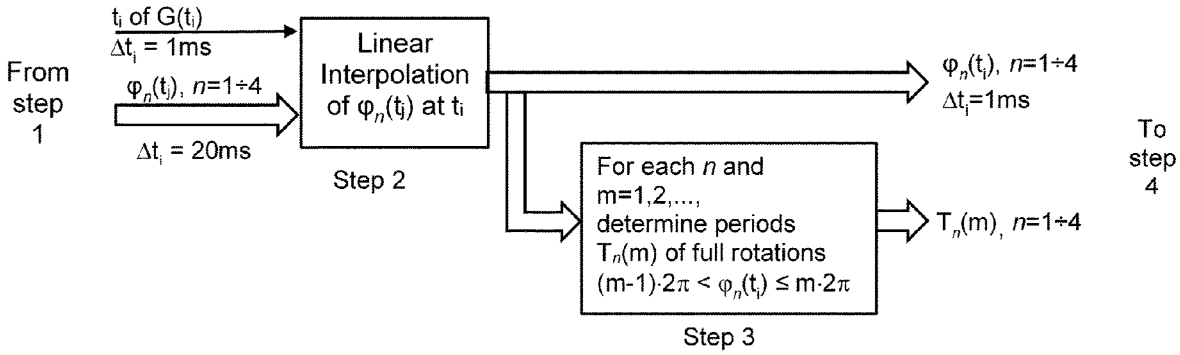

From step 1
ti of G(ti)
Δti = 1ms
φn(tj), n=1÷4
Δti = 20ms
Linear Interpolation of φn(tj) at ti
Step 2
φn(ti), n=1÷4
Δti=1ms
For each n and m=1,2,..., determine periods Tn(m) of full rotations (m-1)·2π < φn(ti) ≤ m·2π
Step 3
Tn(m), n=1÷4
To step 4


**Fig. 2**

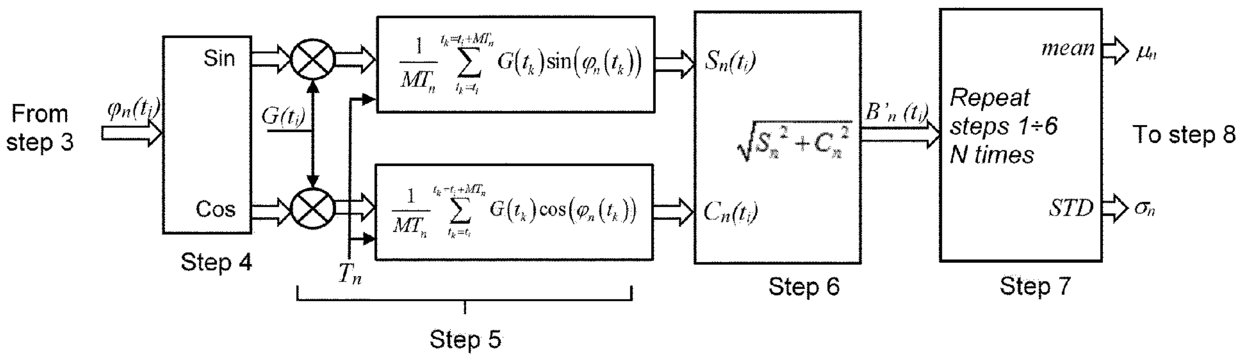

From step 3
φn(tj)
Sin
Cos
Step 4
G(ti)
Tn
Step 5
Sn(ti)
Cn(ti)
Step 6
B'n (ti)
Repeat steps 1÷6 N times
mean
STD
μn
σn
Step 7
To step 8


**Fig. 3**

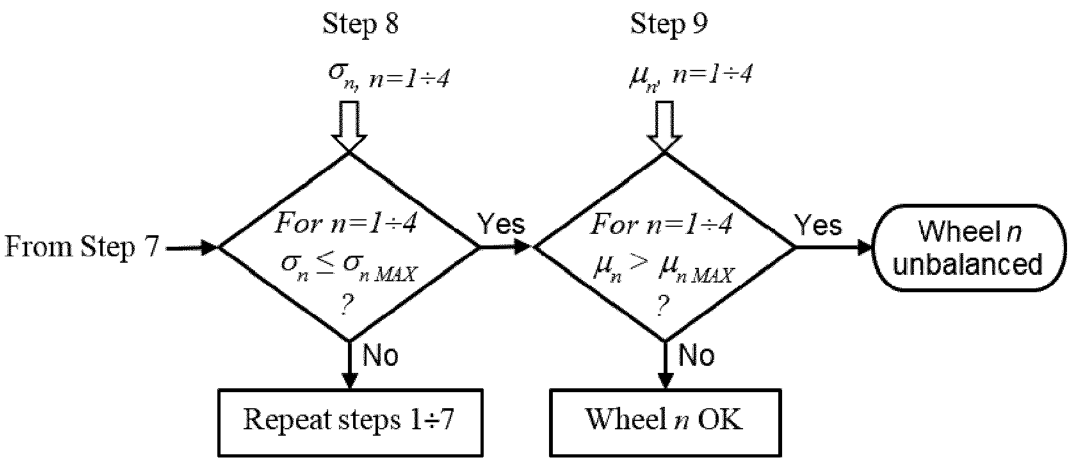
Step 8
$\sigma_n$, n=1÷4
Step 9
$\mu_n$, n=1÷4
From Step 7
For n=1÷4
$\sigma_n \leq \sigma_{n\,MAX}$
?
Yes
For n=1÷4
$\mu_n > \mu_{n\,MAX}$
?
Yes
Wheel n unbalanced
No
Repeat steps 1÷7
No
Wheel n OK

**Fig. 4**

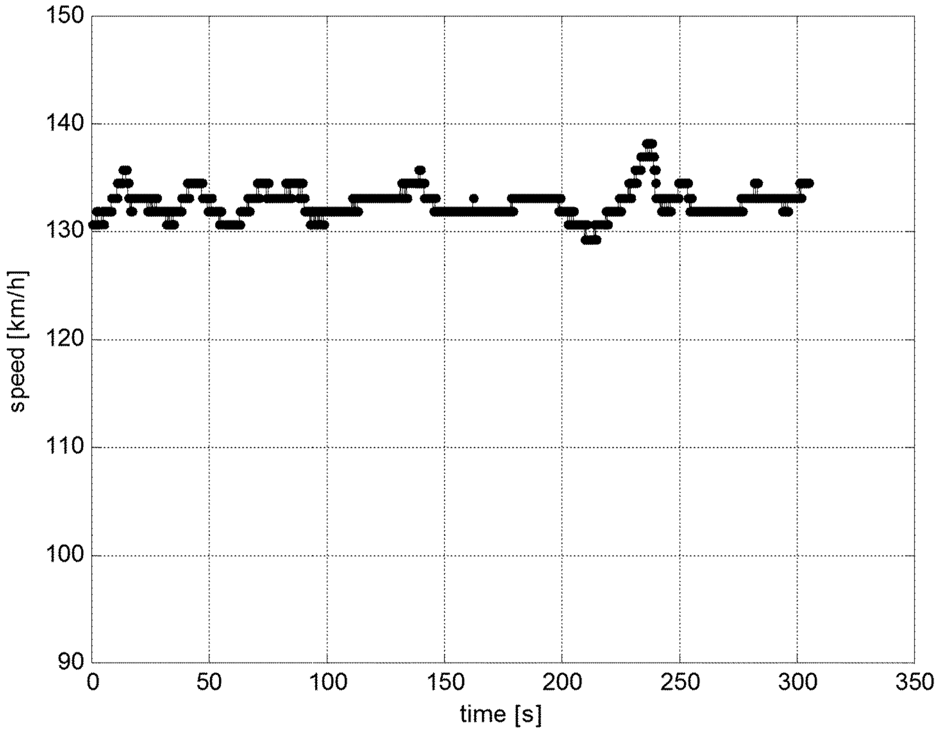
150
140
130
120
110
100
90
speed [km/h]
0
50
100
150
200
250
300
350
time [s]

**Fig. 5a**

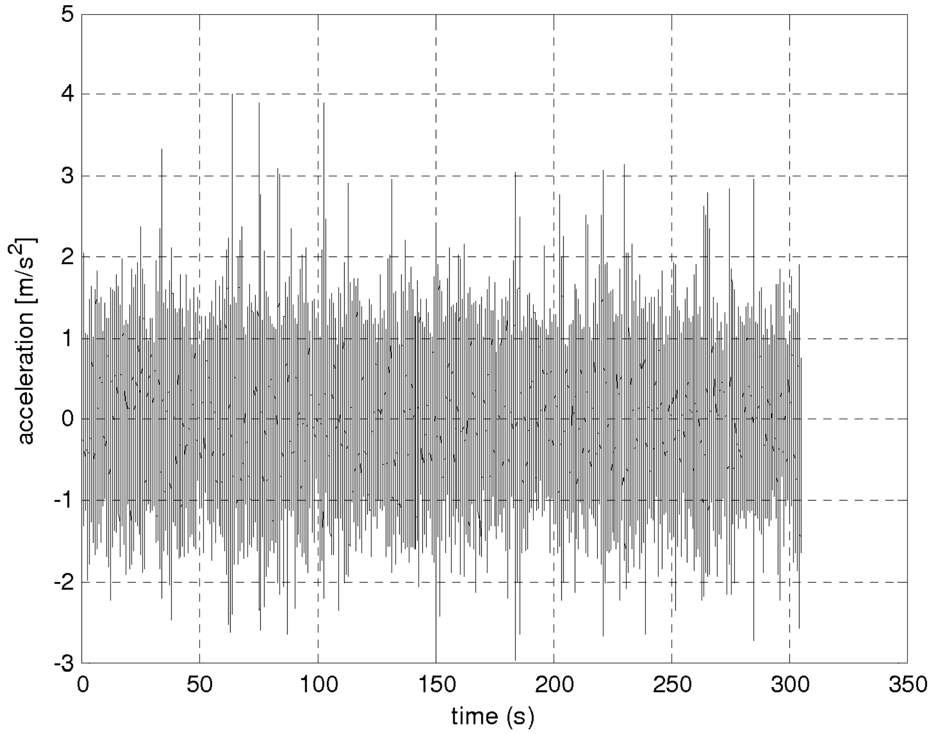
5
4
3
2
1
0
-1
-2
-3
acceleration [m/s2]
0
50
100
150
200
250
300
350
time (s)

Fig. 5b

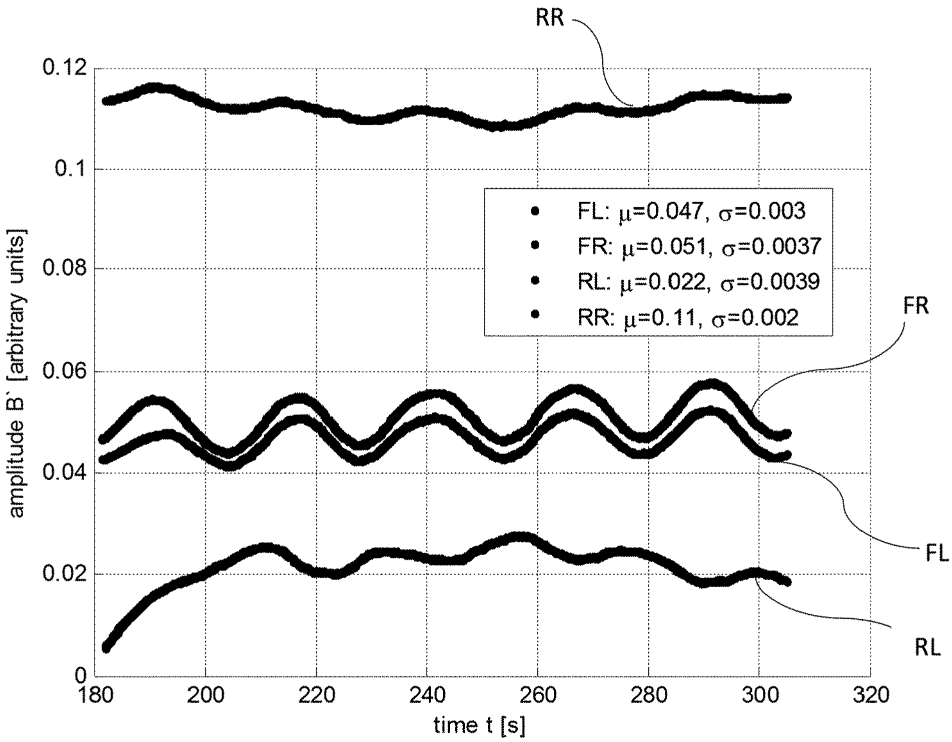
RR
0.12
0.1
0.08
0.06
0.04
0.02
0
amplitude B` [arbitrary units]
FL: μ=0.047, σ=0.003
FR: μ=0.051, σ=0.0037
RL: μ=0.022, σ=0.0039
RR: μ=0.11, σ=0.002
FR
FL
RL
180
200
220
240
260
280
300
320
time t [s]

**Fig. 5c**

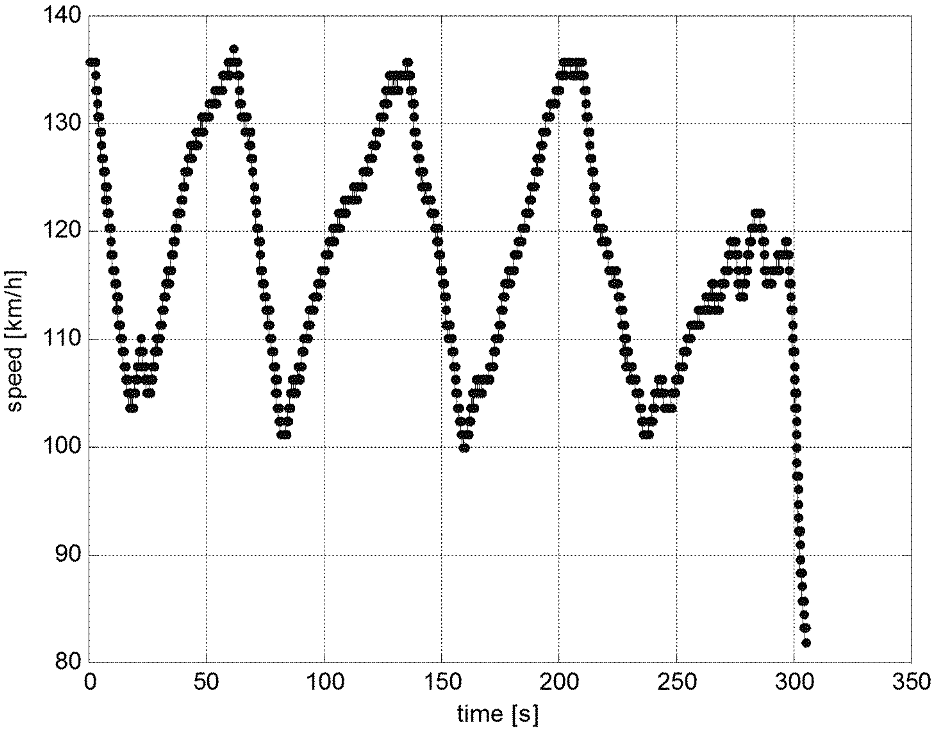
140
130
120
110
100
90
80
speed [km/h]
0
50
100
150
200
250
300
350
time [s]

Fig. 6a

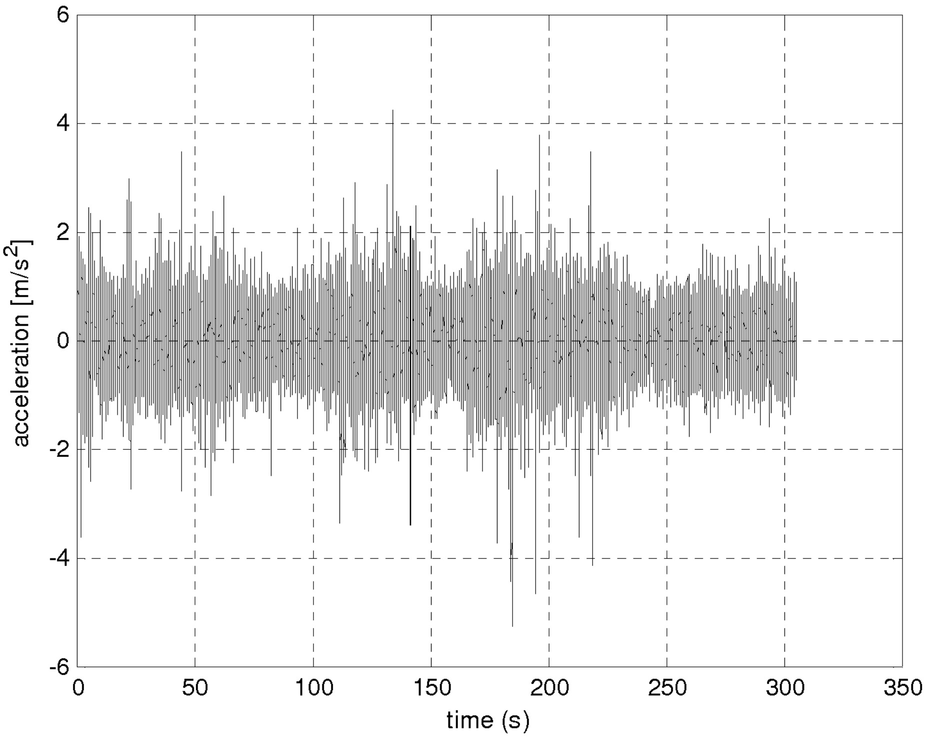


Fig. 6b

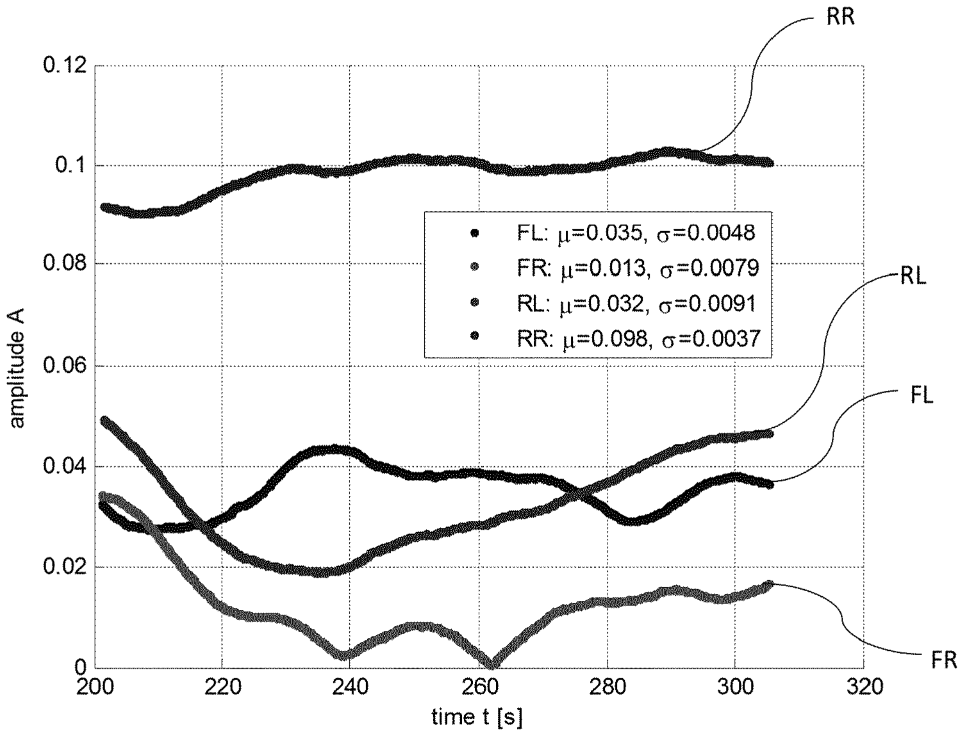
RR
0.12
0.1
0.08
0.06
0.04
0.02
0
amplitude A
FL: μ=0.035, σ=0.0048
FR: μ=0.013, σ=0.0079
RL: μ=0.032, σ=0.0091
RR: μ=0.098, σ=0.0037
RL
FL
FR
200
220
240
260
280
300
320
time t [s]

Fig. 6c

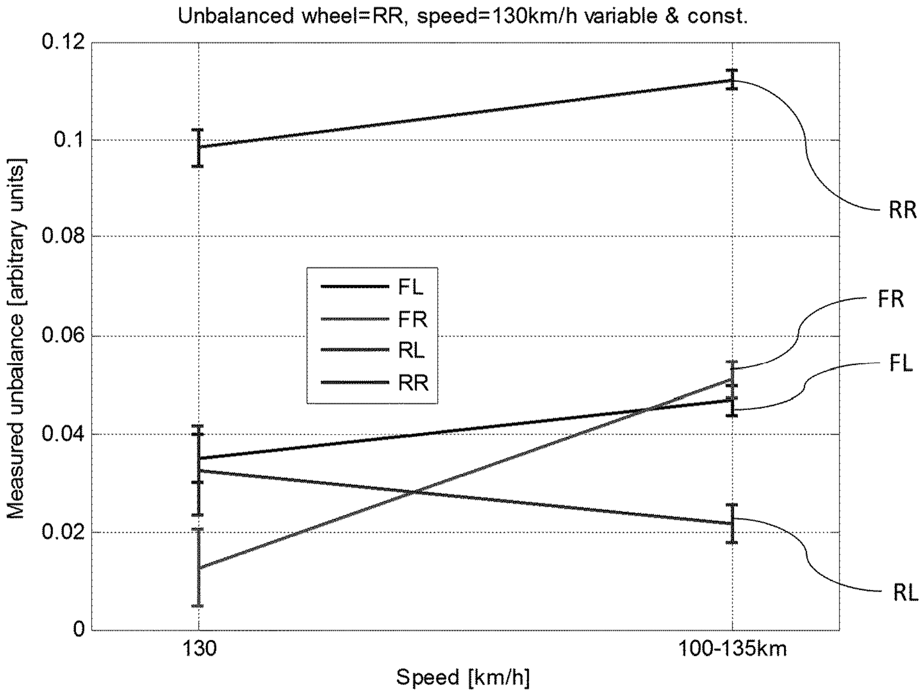
Unbalanced wheel=RR, speed=130km/h variable & const.
Measured unbalance [arbitrary units]
0.12
0.1
0.08
0.06
0.04
0.02
0
130
100-135km
Speed [km/h]
FL
FR
RL
RR
RR
FR
FL
RL

**Fig. 7a**

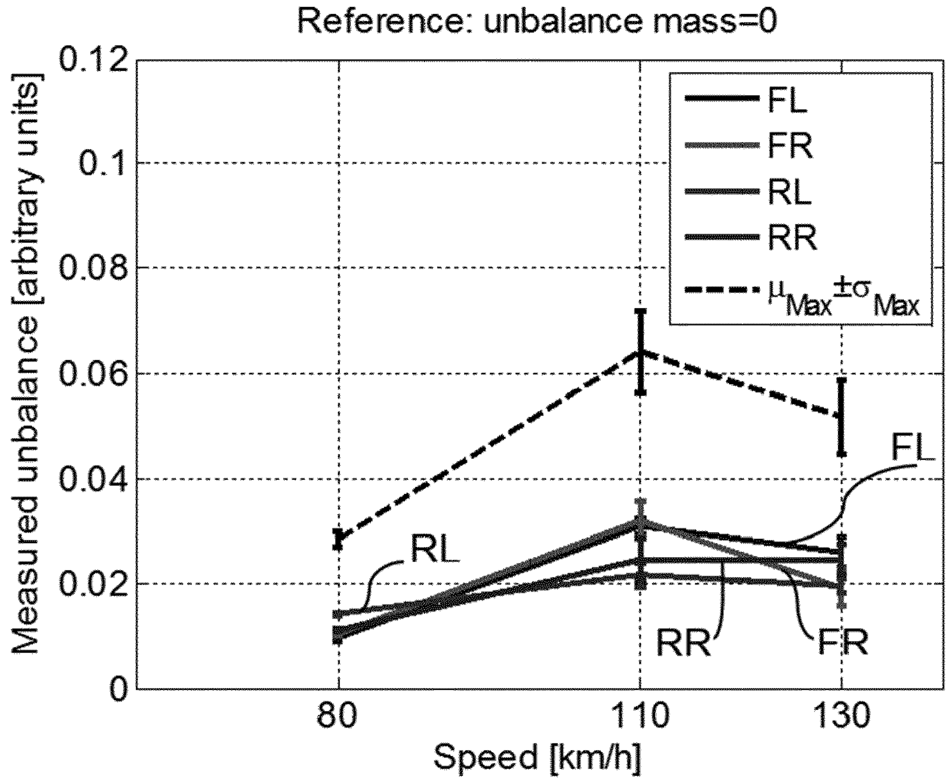
Reference: unbalance mass=0
Measured unbalance [arbitrary units]
0.12
0.1
0.08
0.06
0.04
0.02
0
80
110
130
Speed [km/h]
FL
FR
RL
RR
$\mu_{Max} \pm \sigma_{Max}$
FL
RL
RR
FR

Fig. 7b

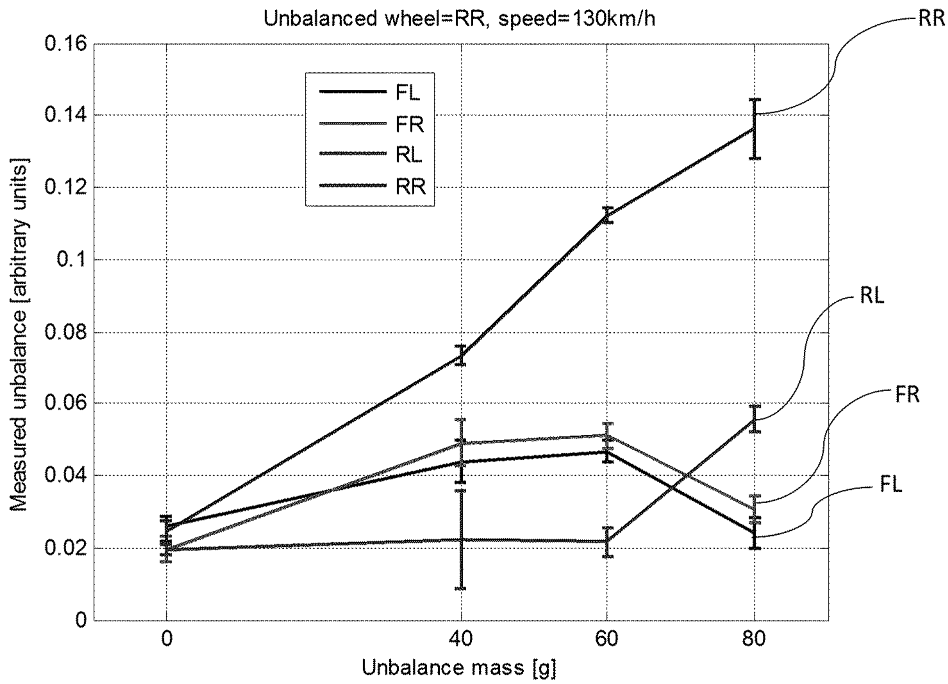
Unbalanced wheel=RR, speed=130km/h
RR
RL
FR
FL
FL
FR
RL
RR
0.16
0.14
0.12
0.1
0.08
0.06
0.04
0.02
0
Measured unbalance [arbitrary units]
0
40
60
80
Unbalance mass [g]

Fig. 7c

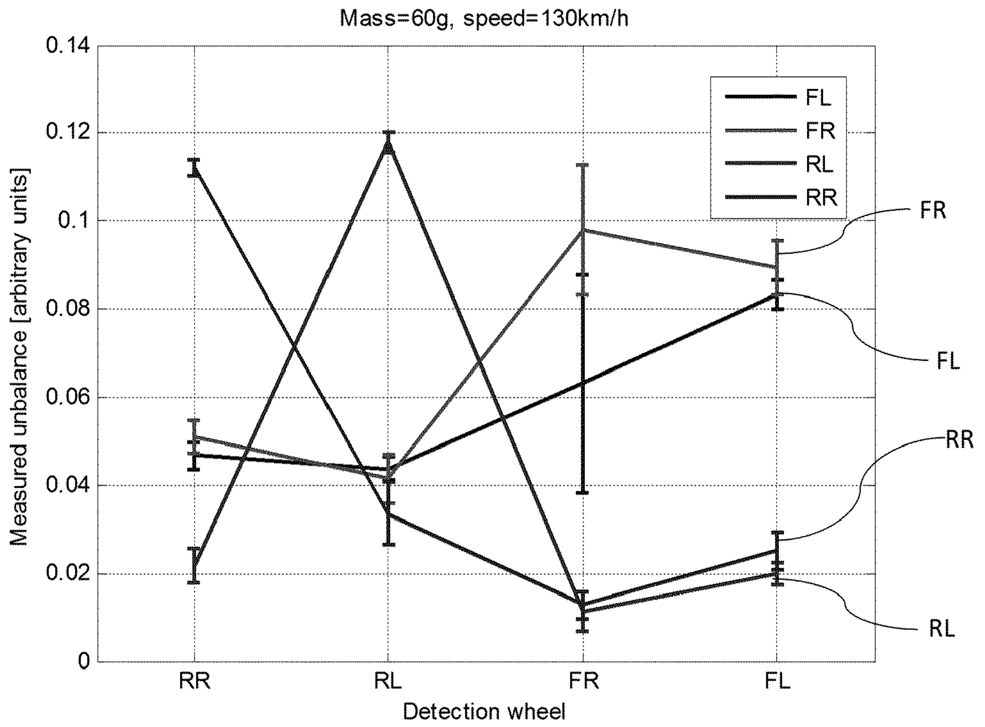
Mass=60g, speed=130km/h
0.14
0.12
0.1
0.08
0.06
0.04
0.02
0
Measured unbalance [arbitrary units]
RR
RL
FR
FL
Detection wheel
FL
FR
RL
RR
FR
FL
RR
RL

Fig 7d

Europäisches Patentamt
European Patent Office
Office européen des brevets

# EUROPEAN SEARCH REPORT

Application Number
EP 18 46 5600

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 3 002 576 A1 (CONTINENTAL AUTOMOTIVE GMBH [DE]) 6 April 2016 (2016-04-06)<br>* the whole document *<br>----- | 1-13 | INV.<br>G01M1/22<br>G01M17/013 |
| | | | TECHNICAL FIELDS SEARCHED (IPC) |
| | | | G01M |

The present search report has been drawn up for all claims

1

| Place of search | Date of completion of the search | Examiner |
|---|---|---|
| The Hague | 21 March 2019 | Daman, Marcel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 46 5600

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2019

| Patent document cited in search report | Publication date | Patent family member(s) | Publication date |
|---|---|---|---|
| EP 3002576 A1 | 06-04-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 14464009 A